# EUROPÄISCHE PATENTSCHRIFT

(11) **EP 3 234 339 B1**
(45) Veröffentlichungstag und Bekanntmachung des Hinweises auf die Patenterteilung: **17.10.2018**
(21) Anmeldenummer: 15813384.3
(22) Anmeldetag: 17.12.2015
(51) Int. Cl.: F02M 37/22, F01M 11/00, F01M 11/06

(54) **ANSAUGANORDNUNG**
SUCTION DEVICE
SYSTEME D'ASPIRATION

(30) Priorität: 20.12.2014 DE 102014019425
(43) Veröffentlichungstag der Anmeldung: 25.10.2017
(73) Patentinhaber: MAN Diesel & Turbo SE, 86153 Augsburg (DE)
(72) Erfinder: PINAULT, Philippe, 44117 Saint André des Eaux (FR)
(86) Internationale Anmeldenummer: PCT/EP2015/080142
(87) Internationale Veröffentlichungsnummer: WO 2016/097087

(56) Entgegenhaltungen:
- DE-A1-102010 024 228
- DE-B- 1 093 142
- DE-U1-202005 003 383
- US-A- 6 029 633
- US-A1- 2001 047 827
- US-A1- 2010 300 952

## Beschreibung

Die Erfindung betrifft eine Ansauganordnung für eine Brennkraftmaschine.
Zum Betrieb einer Brennkraftmaschine ist es erforderlich, Kraftstoff und Schmierstoff aus entsprechenden Vorratsbehältern anzusaugen und der Brennkraftmaschine zur Verfügung zu stellen. Insbesondere dann, wenn der Vorratsbehälter beim Betrieb eine Schiefstellung einnehmen kann, bereitet das Ansaugen des flüssigen Mediums aus dem jeweiligen Vorratsbehälter abhängig vom Füllstand des Vorratsbehälters Schwierigkeiten. Dies ist zum Beispiel bei Offshore-Anwendungen sowie Marine-Anwendungen der Fall, in welchen zum Beispiel auf Ölplattformen oder Schiffen eingesetzte Vorratsbehälter gegenüber einer horizontalen Ausrichtung eine Schiefstellung von bis zu 45° einnehmen können. Bislang sind keine Ansauganordnungen bekannt, die unter solchen Bedingungen ein allseits zuverlässiges Ansaugen eines flüssigen Mediums aus einem Behälter ermöglichen.

DE 10 2010 024228 A1, US 2001/047827, DE 20 2005 003383 U1 und DE 10 93 142 B beschreiben Ansauganordnungen für Brennkraftmaschinen gemäß dem Oberbegriff des Anspruchs 1. Hiervon ausgehend liegt der vorliegenden Erfindung die Aufgabe zugrunde, eine neuartige Ansauganordnung zu schaffen. Diese Aufgabe wird durch eine Ansauganordnung nach Anspruch 1 gelöst. Erfindungsgemäß ist das oder jedes Saugrohr an einem vom Saugkorb abgewandten zweiten Ende um eine Achse derart schwenkbar gelagert, dass das jeweilige Saugrohr und damit der Saugkorb einer durch eine Bewegung des Behälters initiierten Bewegung der anzusaugenden Flüssigkeit innerhalb des Behälters folgt. Eine derartige Ansauganordnung ermöglicht selbst bei extremen Schiefstellungen des Behälters ein sicheres Ansaugen der anzusaugenden Flüssigkeit aus dem Behälter.

Vorzugsweise begrenzen Anschläge eine Schwenkbewegung bzw. Pendelbewegung des oder jedes Saugrohrs und damit des Saugkorbs. Hierdurch wird gewährleistet, stets ein zum Verschwenken des oder jedes Saugrohrs und damit Saugkorbs ausreichender Abstand eines Schwerpunkt des Saugkorbs von einer Schwenkachse für das oder jedes Saugrohr gegeben ist.
Nach einer Weiterbildung ist dem oder jedem Saugrohr jeweils ein Rückschlagventil zugeordnet, welches dann, wenn die mit dem jeweiligen Saugrohr zusammenwirkende Saugpumpe stillsteht, ein Rückströmen der Flüssigkeit aus dem jeweiligen Saugrohr in den Behälter verhindert. Hierdurch wird gewährleistet, dass im jeweiligen Saugrohr stets eine definierte Menge an Flüssigkeit enthalten ist, sodass unmittelbar nach dem Starten der entsprechenden Saugpumpe unabhängig von der aktuellen Relativlage des jeweiligen Saugrohrs und damit des Saugkorbs Flüssigkeit in Richtung auf die Brennkraftmaschine gefördert werden kann.
Vorzugsweise ist mindestens einem Saugrohr benachbart zum Saugkorb im Bereich des ersten Ends des jeweiligen Saugrohrs ein Füllstandsensor zugeordnet. Hiermit kann überwacht werden, ob der Saugkorb von Flüssigkeit umspült ist, ob also grundsätzlich Flüssigkeit angesaugt werden kann.

Nach der Erfindung weist die Ansauganordnung zwei Saugrohre auf, die mit ihren ersten Enden in einem gemeinsamen Saugkorb münden und deren zweite Enden derart schwenkbar gelagert sind, dass die zweiten Enden der Saugrohre um eine gemeinsame Schwenkachse schwenkbar sind. Dabei verlaufen die beiden Saugrohre, die vorzugsweise integraler Bestandteil einer monolithischen Saugrohrbaugruppe sind, im Wesentlichen parallel zueinander und sind an ihren zweiten Enden derart in entgegengesetzte Richtungen umgelenkt, dass Längsachsen dieser zweiten Enden auf der gemeinsamen Schwenkachse liegen. Diese Ausführungsform der Erfindung ist für eine Sauganordnung, die dem Ansaugen von Schmieröl über eine Hauptpumpe sowie Hilfspumpe dient, von Vorteil.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine perspektivische Ansicht einer erfindungsgemäßen Ansauganordnung zusammen mit einem Behälter;

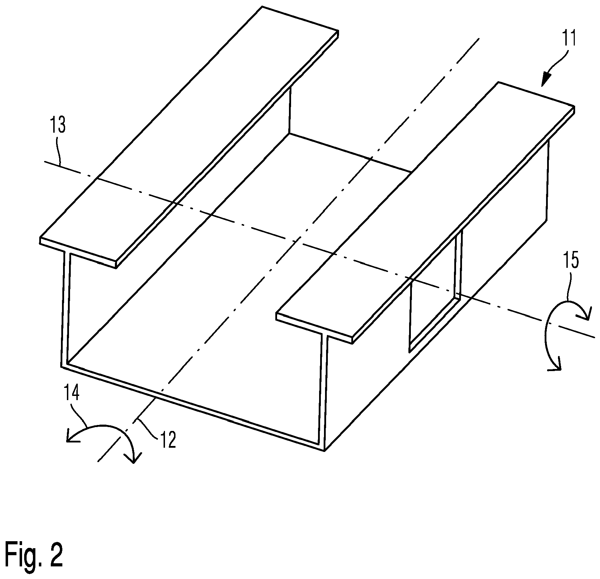

- Fig. 2:: den Behälter der Fig. 1 in Alleindarstellung;

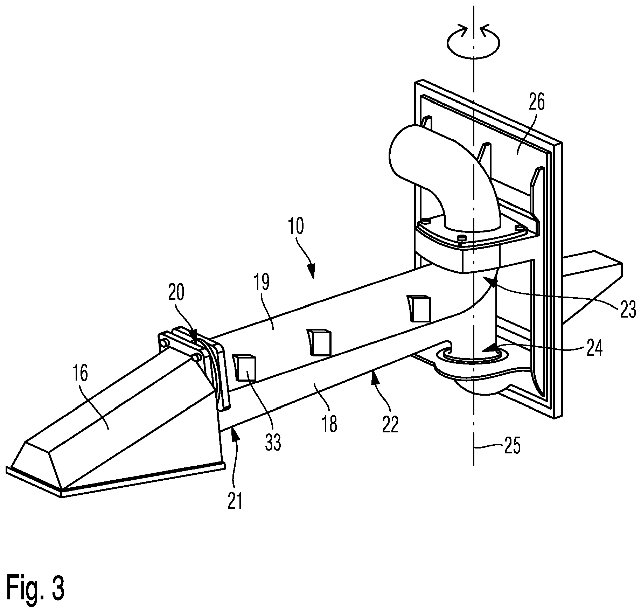

- Fig. 3:: die Ansauganordnung der Fig. 1 in Alleindarstellung;
- Fig. 4:: die Ansauganordnung der Fig. 1 in unterschiedlichen Relativpositionen zum Gehäuse;

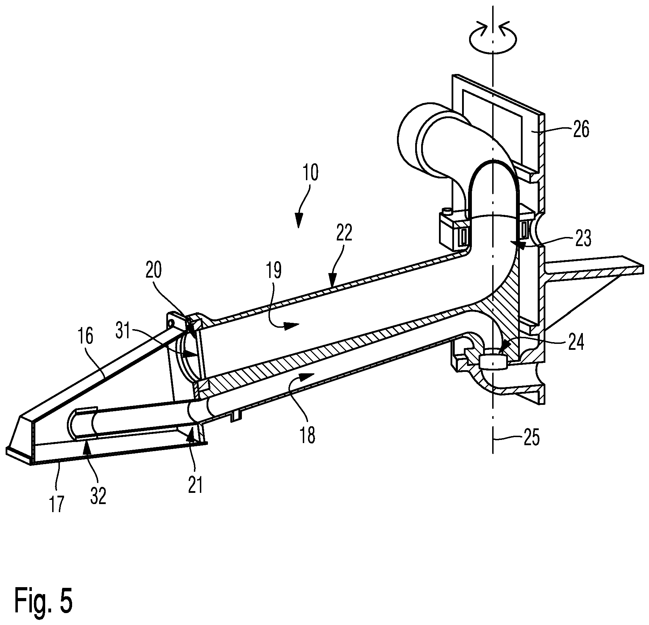

- Fig. 5:: einen Querschnitt durch die Ansauganordnung der Fig. 1 und 3; und
- Fig. 6:: ein Detail der Fig. 5.

Die hier vorliegende Erfindung betrifft eine Ansauganordnung zum Ansaugen eines flüssigen Mediums aus einem Behälter. Vorzugsweise kommt eine solche Ansauganordnung an einer Brennkraftmaschine zum Einsatz, die in einer Offshore-Anwendung oder einer Marine-Anwendung genutzt wird.

Nachfolgend wird die Erfindung für eine Ansauganordnung beschrieben, die als flüssiges Medium Schmieröl aus einem Schmierölbehälter ansaugt und zur Schmierung einer Brennkraftmaschine zur Verfügung stellt.

Die Erfindung ist jedoch nicht auf diesen Anwendungsfall beschränkt. Vielmehr kann die Erfindung auch genutzt werden, um zum Beispiel Kraftstoff anzusaugen und einer Brennkraftmaschine zur Verfügung zu stellen.

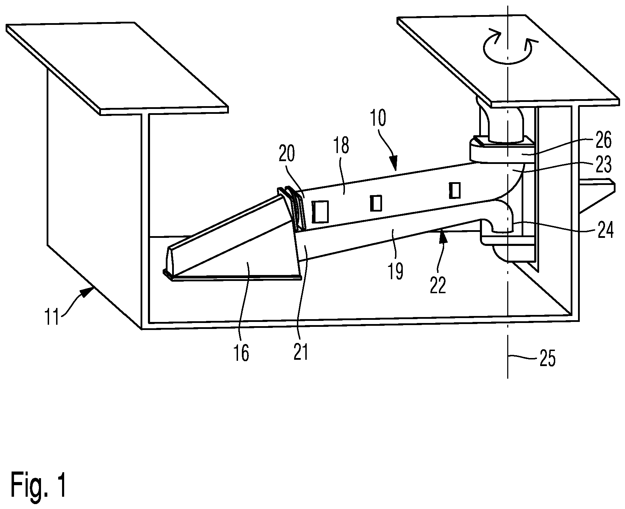

Fig. 1 zeigt ein bevorzugtes Ausführungsbeispiel einer erfindungsgemäßen Ansauganordnung 10, die im Ausführungsbeispiel dem Ansaugen von Schmieröl dient, und zwar in Kombination mit einem Behälter 11, in welchem das anzusaugende Schmieröl bereitgehalten wird. Die Ansauganordnung 10 ist innerhalb des Behälters 11 angeordnet.

Fig. 1 zeigt den Behälter 11, in welchem das anzusaugende Schmieröl bereitgehalten wird, in Alleindarstellung. Der Behälter 11 verfügt über zwei horizontal verlaufende Längsachsen 12 und 13, um die sich der Behälter 11 im Betrieb im Sinne der Doppelpfeile 14 und 15 abhängig von Umgebungsbedingungen bewegen kann. Dies ist insbesondere bei Offshore-Anwendungen und Marine-Anwendungen der Fall. Die Bewegung um die Achse 12 wird auch als Rollbewegung und die Bewegung um die Achse 15 auch als Nickbewegung bezeichnet.

Infolge der Verlagerung des Behälters 11 um seine Achsen 14 und 15 verlagert sich die im Behälter 11 bereitgehaltene und anzusaugende Flüssigkeit, nämlich im gezeigten Ausführungsbeispiel das bereitgehaltene Schmieröl. Insbesondere dann, wenn die Schwenkwinkel um die oder jede Achse 14 und/oder 15 relativ groß sind und/oder der Füllstand des Schmieröls im Behälter 11 relativ gering ist, bereitet das zuverlässige Ansaugen des Schmieröls aus dem Behälter 11 mit Hilfe von aus dem Stand der Technik bekannten Ansauganordnungen Schwierigkeiten. Die erfindungsgemäße Ansauganordnung 10 ermöglicht unter allen möglichen Relativpositionen des Behälters 11 ein sicheres und zuverlässiges Ansaugen von im Behälter 11 bereitgehaltenem Schmieröl.

Die erfindungsgemäße Ansauganordnung 10 zum Ansaugen des Schmieröls aus dem Behälter 11 verfügt über einen Saugkorb 16, über welchen das Schmieröl aus dem Behälter 11 angesaugt werden kann. Der Saugkorb 16 verfügt dabei über ein Sieb 17, welches verhindert, dass Verunreinigungen bzw. Feststoffe, die im Schmieröl enthalten sind, mit angesaugt werden.

Die erfindungsgemäße Ansauganordnung 10 verfügt weiterhin über zwei Saugrohre 18 und 19. Jedes Saugrohr der Ansauganordnung, im gezeigten Ausführungsbeispiel beide Saugrohre 18 und 19, mündet bzw. münden mit einem ersten Ende 20 bzw. 21 in den Saugkorb 16, wobei über das oder jedes Saugrohr 18, 19 das im Bereich des Saugkorbs 16 angesaugte Schmieröl in Richtung auf eine mit dem jeweiligen Saugrohr 18 bzw. 19 zusammenwirkende, nicht gezeigte Förderpumpe förderbar ist, die letztendlich das angesaugte flüssige Medium, nämlich im gezeigten Ausführungsbeispiel das Schmieröl, in Richtung auf eine Brennkraftmaschine fördert. Im gezeigten Ausführungsbeispiel wirkt mit jedem Saugrohr 18, 19 eine individuelle Saugpumpe zusammen, nämlich mit dem Saugrohr 19 eine nicht gezeigte Hauptpumpe, die nur dann läuft, wenn die Brennkraftmaschine läuft, und mit dem Saugrohr 18 eine Hilfspumpe, die auch dann läuft, wenn die Brennkraftmaschine still steht. Über die Hilfspumpe und das Saugrohr 18 kann demnach Schmieröl in Richtung auf die Brennkraftmaschine gefördert werden, bevor dieselbe läuft.

Erfindungsgemäß sind beide Saugrohre 18 und 19 integraler Bestandteil einer monolithischen Saugrohrbaugruppe 22, oder sind beide Saugrohre 18 und 19 als individuelle Rohre ausgeführt, die zum Beispiel durch Verschweißen miteinander verbunden sein können.
Im Sinne der hier vorliegenden Erfindung ist das oder jedes Saugrohr 18, 19 an einem vom Saugkorb 16 abgewandten zweiten Ende 23 bzw. 24 um eine Achse 25 am Gehäuse 11, nämlich einem Gehäusewandabschnitt 26 des Gehäuses 11, schwenkbar gelagert, nämlich derart, dass das jeweilige Saugrohr 18, 19 und damit der Saugkorb 16 der Bewegung des Behälters 11 bzw. der durch die Bewegung des Behälters 11 initiierten Bewegung der anzusaugenden Flüssigkeit innerhalb des Behälters 11 schwerkraftbedingt folgt.

Wie bereits ausgeführt, kann sich der Behälter 11 im Betrieb, zum Beispiel aufgrund von Seegang, um seine Achsen 12 und 13 im Sinne der Doppelpfeile 14 und 15 statisch oder dynamisch verlagern, wobei dann bedingt durch die gelenkige Lagerung der Saugrohre 18 und 19 und damit des Saugkorbs 16 am Wandabschnitt 26 des Behälters 11 die Saugrohre 18 und 19 und damit der Saugkorb 16 schwerkraftbedingt eine Schwenkbewegung bzw. Pendelbewegung um die Achse 25 ausführen bzw.ausführt. Verlagert sich demnach das anzusaugende flüssige Medium, im gezeigten Ausführungsbeispiel das anzusaugende Schmieröl, aufgrund einer Schiefstellung des Behälters 11 in einen Abschnitt des Behälters 11, so folgt die Aussauganordnung, insbesondere der Saugkorb 16, dieser Bewegung des flüssigen Mediums.

Erfindungsgemäß sind die beiden zweiten Enden 23 und 24 der beiden Saugrohre 18 und 19 um eine gemeinsame Schwenkachse 25 schwenkbar, wozu die beiden Saugrohre 18, 19, die an sich im Wesentlichen parallel zueinander verlaufen, an ihren zweiten Enden 23 und 24 in entgegengesetzte Richtungen umgelenkt sind, sodass Längsachsen dieser zweiten Enden 23 und 24 der beiden Saugrohre 18 und 19 auf der gemeinsamen Schwenkachse 25 liegen.

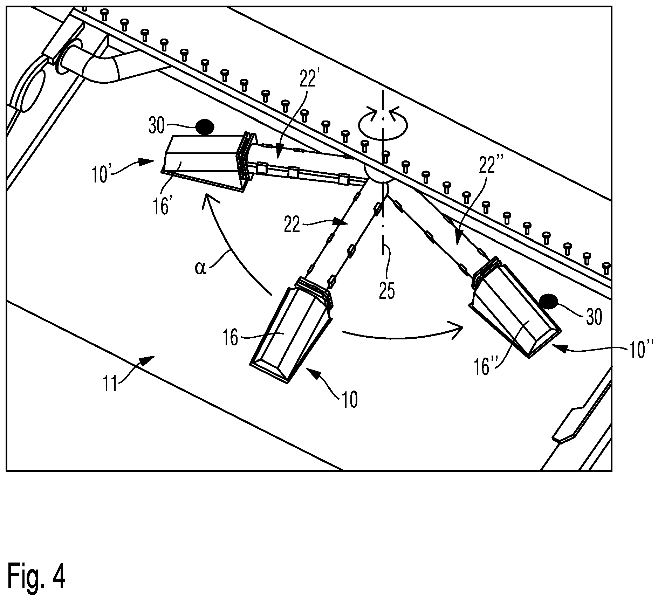

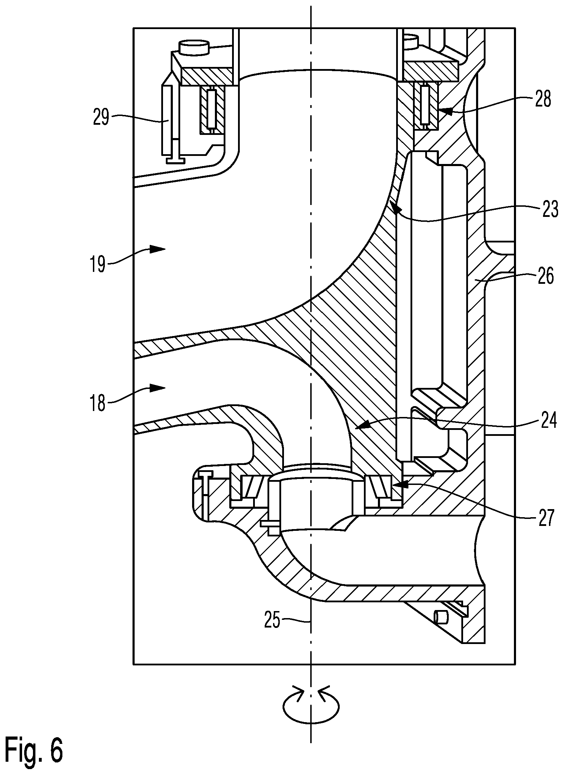

Erfindungsgemäß, den zweiten Enden 23 und 24 der Saugrohre 18 und 19 sind dabei, wie am besten Fig. 6 entnommen werden kann, Lager 27 und 28 zugeordnet. Bei diesen Lagern 27 und 28 kann es sich um Wälzlager oder dergleichen handeln.
Zur Gewährleistung einer einfachen Montage ist dabei ein behälterseitiger Lagerring 29, der mit dem dem zweiten Ende 23 des Saugrohrs 19 zugeordneten Lager 28 zusammenwirkt, zweiteilig ausgebildet.
Die Schwenkbewegung der Ansauganordnung 10 um die Schwenkachse 25 wird gemäß Fig. 4 durch Anschläge 30 begrenzt.

Die Anschläge 30 spannen dabei einen Winkelbereich a auf, innerhalb dessen die Schwenkbewegung des oder jedes Saugrohrs 18, 19 und damit des Saugkorbs 16 möglich ist. Dieser Winkelbereich a beträgt vorzugsweise maximal 150°.

Dann, wenn der Saugkorb 16 in Folge einer Schiefstellung des Behälters 11 an einem der Anschläge 30 zur Anlage kommt, ist stets ein ausreichender Abstand zwischen dem Schwerpunkt des Saugkorbs 16 und der Schwenkachse 25 gegeben, sodass ein ausreichendes, schwerkraftabhängiges Drehmoment zum Verlagern der Ansauganordnung 10 um die Schwenkachse 25 in allen Situationen gegeben ist.

Fig. 4 zeigt drei unterschiedliche Positionen der Ansauganordnung 10 im Behälter 11, wobei abhängig von der Relativlage des Behälters 11 die Ansauganordnung 10 derart verlagert werden kann, dass dieselbe an einem der Anschläge 30 zur Anlage kommt. Diese Endstellungen der Ansauganordnung 10 an den Anschlägen 30 sind durch die Bezugsziffern 10', 16', 22' sowie 10", 16" und 22" für die Ansauganordnung 10, den Saugkorb 16 und die Saugrohrbaugruppe 22 gezeigt.

Im gezeigten Ausführungsbeispiel ist jedem der Saugrohre 18, 19 ein Rückschlagventil 31 bzw. 32 zugeordnet. Durch diese Rückschlagventile 31, 32 wird verhindert, dass einmal über den Saugkorb 16 in das jeweilige Saugrohr 18 bzw. 19 angesaugtes Schmieröl aus dem jeweiligen Saugrohr 18, 19 zurücklaufen kann. Selbst dann, wenn die mit dem jeweiligen Saugrohr 18, 19 zusammenwirkende Saugpumpe demnach still steht, verbleibt im jeweiligen Saugrohr 18, 19 eine definierte Schmierölmenge, sodass unmittelbar nach dem Einschalten der jeweiligen Saugpumpe eine definierte Schmierölmenge gefördert werden kann, und zwar unabhängig davon, ob der Saugkorb 16 tatsächlich vom anzusaugenden Schmieröl umgeben ist.

Im gezeigten, bevorzugten Ausführungsbeispiel ist der Saugrohrbaugruppe 22, welche die beiden Saugrohre 18 und 19 bereitstellt, benachbart zum Saugkorb 16 ein Füllstandsensor 33 zugeordnet. Mit diesem Füllstandsensor 33 kann überwacht werden, ob der Saugkorb 16 tatsächlich vom anzusaugenden Schmieröl umspült ist, ob also über den Saugkorb 16 tatsächlich Schmieröl angesaugt werden kann. Sollte dies nicht der Fall sein, so kann auf einen zu geringen Füllstand im Behälter 11 geschlossen und eine entsprechende Meldung zum Nachfüllen des Behälters 11 generiert werden.

Der Saugkorb 16 der Ansauganordnung 10 ist vorzugsweise aus einem relativ schweren, metallischen Werkstoff gefertigt ist, wohingegen das oder jedes Saugrohr 18, 19 der Ansauganordnung 10 vorzugsweise aus einem relativ leichten, metallischen Werkstoff gefertigt ist. Der Saugkorb 16 kann aus Stahl und das oder jedes Saugrohr 18, 19 als Aluminium gefertigt sein. Dies unterstützt die schwerkraftabhängige Verlagerung der Ansauganordnung 10 um die Schwenkachse 25 infolge der Schiefstellung oder Bewegung des Behälters 11.

### Bezugszeichenliste

- 10: Ansauganordnung
- 11: Behälter
- 12: Längsachse
- 13: Längsachse
- 14: Behälterbewegung
- 15: Behälterbewegung
- 16: Saugkorb
- 17: Sieb
- 18: Saugrohr
- 19: Saugrohr
- 20: Ende
- 21: Ende
- 22: Saugrohrbaugruppe
- 23: Ende
- 24: Ende
- 25: Schwenkachse
- 26: Behälterwandabschnitt
- 27: Lager
- 28: Lager
- 29: Lagerdeckel
- 30: Anschlag
- 31: Rückschlagventil
- 32: Rückschlagventil
- 33: Füllstandsensor

## Patentansprüche

1. Ansauganordnung (10) für eine Brennkraftmaschine zum Ansaugen eines flüssigen Mediums aus einem Behälter (11), mit
einem Saugkorb (16), über welchen flüssiges Medium aus dem Behälter (11) ansaugbar ist;
mindestens einem Saugrohr (18, 19), welches mit einem ersten Ende (20, 21) in den Saugkorb (16) mündet und über welches das angesaugte, flüssige Medium in Richtung auf eine mit dem jeweiligen Saugrohr (18, 19) zusammenwirkende Saugpumpe förderbar ist;
wobei das oder jedes Saugrohr (18, 19) an einem vom Saugkorb (16) abgewandten zweiten Ende (23, 24) um eine Achse (25) derart schwenkbar gelagert ist, dass das jeweilige Saugrohr (18, 19) und damit der Saugkorb (16) einer durch eine Bewegung des Behälters (11) initiierten Bewegung der anzusaugenden Flüssigkeit innerhalb des Behälters (11) folgt,
**gekennzeichnet durch**
zwei Saugrohre (18, 19), die mit ihren ersten Enden (20, 21) in einem gemeinsamen Saugkorb (16) münden und deren zweite Enden (23, 24) derart schwenkbar gelagert sind, dass die zweiten Enden (23, 24) der Saugrohre (18, 19) um eine gemeinsame Schwenkachse (25) schwenkbar sind,
wobei die beiden Saugrohre (18 19) im Wesentlichen parallel zueinander verlaufen und an ihren zweiten Enden (23, 24) derart in entgegengesetzte Richtungen umgelenkt sind, dass Längsachsen dieser zweiten Enden (23, 24) auf der gemeinsame Schwenkachse (25) liegen,
die beiden Saugrohre (18, 19) miteinander verbunden oder integraler Bestandteil einer monolithischen Saugrohrbaugruppe (22) sind und
den zweiten Enden (23, 24) der Saugrohre (18, 19) dabei Lager (27, 28) am Behälter (11) zugeordnet sind.

2. Ansauganordnung nach Anspruch 1, **dadurch gekennzeichn t, dass** Anschläge (30) eine Schwenkbewegung des oder jedes Saugrohrs (18, 19) und damit des Saugkorbs (16) begrenzen.

3. Ansauganordnung nach Anspruch 2, **dadurch gekennzeichnet, dass** die Anschläge (30) einen Winkelbereich von maximal 150° für die Schwenkbewegung des oder jedes Saugrohrs (18, 19) und damit des Saugkorbs (16) definieren.

4. Ansauganordnung nach einem der Ansprüche 1 bis 3, **dadurch gekennzeichnet, dass** der Saugkorb (16) ein Sieb (17) umfasst.

5. Ansauganordnung nach einem der Ansprüche 1 oder 4, **dadurch gekennzeichnet, dass** dem oder jedem Saugrohr (18, 19) jeweils ein Rückschlagventil (31, 32) zugeordnet ist, welches dann, wenn die mit dem jeweiligen Saugrohr (18, 19) zusammenwirkende Saugpumpe stillsteht, ein Rückströmen der Flüssigkeit aus dem jeweiligen Saugrohr (18, 19) in den Behälter (11) verhindert.

6. Ansauganordnung nach einem der Ansprüche 1 bis 5, **dadurch gekennzeichnet, dass** einem Saugrohr (18, 19) benachbart zum Saugkorb (16) im Bereich des ersten Endes des Saugrohrs (18, 19) ein Füllstandsensor (33) zugeordnet ist.

7. Ansauganordnung nach einem der Ansprüche 1 bis 6, **dadurch gekennzeichnet, dass** der Saugkorb (16) aus einem relativ schweren, metallischen Werkstoff gefertigt ist, und dass das oder jedes Saugrohr (18, 19) aus einem relativ leichten Werkstoff gefertigt ist.

## Claims

1. A suction arrangement (10) for an internal combustion engine for sucking a liquid medium out of a tank (11), with a strainer (16), via which liquid medium can be sucked out of the tank (11);
at least one suction pipe (18, 19), which with a first end (20, 21) leads into the strainer (18) and via which the sucked-in liquid medium can be conveyed in the direction of a suction pump interacting with the respective suction pipe (18, 19);
wherein the or each suction pipe (18, 19) at a second end (23, 24) facing away from the strainer (16) is pivotably mounted about an axis (25) in such a manner that the respective suction pipe (18, 19) and thus the strainer (16) follows a movement of the liquid to be sucked in within the tank (11) initiated by a movement of the tank (11),
**characterized by**
two suction pipes (18, 19), which with their first ends (20, 21) lead into a common strainer (16) and the second ends (23, 24) of which are pivotably mounted in such a manner that the second ends (23, 24) of the suction pipes (18, 19) can be pivoted about a common pivot axis (25),
wherein the two suction pipes (18, 19) extend substantially parallel to one another and to their second ends (23, 24) are deflected in opposite directions in such a manner that longitudinal axes of these second ends (23, 24) lie on the common pivot axis (25),
the two suction pipes (18, 19) are connected to one another or are an integral part of a monolithic pipe assembly (22) and
the second ends (23, 24) of the suction pipes (18, 19) are assigned bearings (27, 28) on the tank (11).

2. The suction arrangement according to Claim 1, **characterized in that** stops (30) limit a pivot movement of the or each suction pipe (18, 19) and thus of the strainer (16).

3. The suction arrangement according to Claim 2, **characterized in that** the stops (30) define an angular range of maximally 150° for the pivot movement of the or each suction pipe (18, 19) and thus of the strainer (16).

4. The suction arrangement according to any one of the Claims 1 to 3, **characterized in that** the strainer (16) comprises a sieve (17).

5. The suction arrangement according to any one of the Claims 1 or 4, **characterized in that** the or each suction pipe (18, 19) is assigned a non-return valve (31, 32) in each case, which in particular when the suction pump interacting with the respective suction pipe (18, 19) is stationary, prevents a return flow of the liquid out of the respective suction pipe (18, 19) into the tank (11).

6. The suction arrangement according to any one of the Claims 1 to 5, **characterized in that** a suction pipe (18, 19) adjacent to the strainer (16) in the region of the first end of the suction pipe (18, 19) is assigned a filling level sensor (33).

7. The suction arrangement according to any one of the Claims 1 to 6, **characterized in that** the strainer (16) is produced from a relatively heavy, metallic material, and **in that** the or each suction pipe (18, 19) is produced from a relatively light material.

## Revendications

1. Dispositif d'aspiration (10) pour un moteur à combustion interne pour aspirer un milieu liquide hors d'un récipient (11), comportant
une crépine d'aspiration (16), par l'intermédiaire de laquelle un milieu liquide peut être aspiré hors du récipient (11) ;
au moins un tuyau d'aspiration (18, 19), qui débouche par une première extrémité (20,21) dans la crépine d'aspiration (16) et par l'intermédiaire duquel le milieu liquide aspiré peut être refoulé dans la direction d'une pompe d'aspiration coopérant avec le tuyau d'aspiration respectif (18, 19) ;
dans lequel le ou chaque tuyau d'aspiration (18,19) est positionné à une deuxième extrémité (23,24) qui se détourne de la crépine d'aspiration (16) de manière pivotante autour d'un axe (25), de telle sorte que le tuyau d'aspiration respectif (18,19) et donc la crépine d'aspiration (16) suivent un mouvement du liquide à aspirer à l'intérieur du récipient (11) amorcé par un mouvement du récipient (11),
**caractérisé par**
deux tuyaux d'aspiration (18,19), qui débouchent par leurs premières extrémités (20,21) dans une crépine d'aspiration commune (16) et dont les deuxièmes extrémités (23,24) sont positionnés de manière pivotante de telle sorte que les deuxièmes extrémités (23, 24) des tuyaux d'aspiration (18, 19) puissent être pivotées autour d'un axe de pivotement commun (25), dans lequel les deux tuyaux d'aspiration (18,19) s'étendent essentiellement parallèlement l'un à l'autre et sont déviés au niveau de leurs deuxièmes extrémités (23,24) dans des directions opposées de telle sorte que les axes longitudinaux de ces deuxièmes extrémités (23,24) soient situées sur l'axe de pivotement commun (25),
les deux tuyaux d'aspiration (18,19) sont reliés l'un à l'autre ou sont partie intégrante d'un module de tuyaux d'aspiration monolithique (22) et
les deuxièmes extrémités (23,24) des tuyaux d'aspiration (18,19) sont ainsi coordonnées à des paliers (27,28) sur le récipient (11).

2. Dispositif d'aspiration selon la revendication 1, **caractérisé en ce que** des butées (30) délimitent un mouvement de pivotement du ou de chaque tuyau d'aspiration (18,19) et donc de la crépine d'aspiration (16).

3. Dispositif d'aspiration selon la revendication 2, **caractérisé en ce que** les butées (30) définissent une plage angulaire de 150° maximale pour le mouvement de pivotement du ou de chaque tuyau d'aspiration (18, 19) et donc de la crépine d'aspiration (16).

4. Dispositif d'aspiration selon une des revendications 1 à 3, **caractérisé en ce que** la crépine d'aspiration (16) comprend un tamis (17).

5. Dispositif d'aspiration selon une des revendications 1 à 4, **caractérisé en ce que** le ou chaque tuyau d'aspiration (18, 19) est respectivement coordonné à un clapet anti retour (31,32), qui empêche ensuite, lorsque la pompe d'aspiration coopérant avec le tuyau d'aspiration (18,19) respectif est à l'arrêt, un reflux du liquide hors du tuyau d'aspiration respectif (18, 19) dans le récipient (11).

6. Dispositif d'aspiration selon une des revendications 1 à 5, **caractérisé en ce que** un tuyau d'aspiration (18, 19) à proximité de de la crépine d'aspiration (16) au niveau de la première extrémité du tuyau d'aspiration (18,19) est coordonné à un capteur de niveau de remplissage (33).

7. Dispositif d'aspiration selon une des revendications 1 à 6, **caractérisé en ce que** la crépine d'aspiration (16) est fabriquée dans un matériau métallique relativement lourd et **en ce que** le ou chaque tuyau d'aspiration (16,19) est fabriqué dans un matériau relativement léger.
